# EUROPÄISCHE PATENTSCHRIFT

(11) **EP 0 672 013 B1**
(45) Veröffentlichungstag und Bekanntmachung des Hinweises auf die Patenterteilung: **20.11.1996**
(21) Anmeldenummer: 92918996.7
(22) Anmeldetag: 12.09.1992
(51) Int. Cl.: B65G 17/38, B65G 19/18

(54) **ANTRIEBS- UND FÜHRUNGSEINRICHTUNG FÜR STETIGFÖRDERER**
DRIVE AND GUIDE DEVICE FOR CONTINUOUS HANDLING EQUIPMENT
DISPOSITIF D'ENTRAINEMENT ET DE GUIDAGE POUR ENGINS DE MANUTENTION CONTINUE

(30) Priorität: 24.09.1991 DE 4131676; 02.09.1992 DE 4229238
(43) Veröffentlichungstag der Anmeldung: 20.09.1995
(73) Patentinhaber: PWH Anlagen + Systeme GmbH, D-66386 St. Ingbert-Rohrbach (DE)
(72) Erfinder: WOLPERS, Franz, Maria, D-6601 Scheidt/SB (DE); DECKARM, Kurt, D-6679 St. Ingbert (DE)
(86) Internationale Anmeldenummer: EP9202100
(87) Internationale Veröffentlichungsnummer: WO9306029

(56) Entgegenhaltungen:
- DE-A- 2 161 092
- DE-A- 3 447 218
- DE-B- 1 283 612
- DE-C- 3 533 774
- GB-A- 2 088 807
- GB-A- 2 104 468
- Derwent's abstract, Nr. 87-141 447/20, SU 1 258 782, publ. Woche 8720 (

## Beschreibung

Die Erfindung betrifft eine Antriebs- und Führungseinrichtung für mit Transportelementen versehene Stetigförderer, mit mindestens einem als profilierte Gummigliederkette mit Stahlseilzugträgern ausgebildetem Zugorgan, das in seinen jeweiligen Endbereichen um ebenfalls profilierte Antriebsscheiben oder -räder umlenkbar ist, wobei die Gummigliederkette auf ihrer den Transportelementen zugewandten Seite als Blockverzahnung und auf der gegenüberliegenden Seite als Antriebsverzahnung ausgebildet ist und über Verbindungs- und Führungselemente, wie Rollen oder dgl. mit den Transportelementen zusammenwirkt.

Als Zugorgan kommen bei Stetigförderern, wie beispielsweise Kratzförderern, Plattenbändern, Becherwerken, Fahr- und Rolltreppen vielfach Laschenketten zur Anwendung, die wartungsintensive, verschleißanfällige und lärmintensive Maschinenbauteile darstellen. Aufgrund des sogenannten Polygoneffektes können mit diesen Ketten nur relativ geringe Fördergeschwindigkeiten erzielt werden, wobei gleichzeitig hohe Bewegungswiderstände der Ketten und Stützrollen in den Führungen zu überwinden sind. Stahlketten mit Trag- und Führungsrollen bauen schwer und lassen sich nur unbefriedigend vorspannen. Dies bewirkt besonders bei Seiten- und Portalkratzern als Stetigförderer einen erheblichen Kettendurchhang im Förderstrang mit negativen Auswirkungen auf das Arbeitsverhalten des Gesamtgerätes. Schwere Ketten und hohe Bewegungswiderstände bei niedrigen Fördergeschwindigkeiten verlangen bei vorgegebener Förderleistung größere und damit ebenfalls schwerere Transportelemente, wie z.B. Schaufeln, Becher, Platten, Stufen oder dgl. Dies hat wiederum Auswirkungen auf die zu installierende Antriebsleistung und das Dienstgewicht des Stetigförderers.

Der DE-A 35 33 774 ist eine Aufhängung der Austragseinrichtungen an Kratzfördergeräten, wie Brückenkratzern, Becherwerken oder dgl., zu entnehmen, die mindestens ein endloses angetriebenes Zugorgan in Form einer Rundgliederkette beinhaltet, welches über Mitnehmer mit mehreren entlang des Zugorganes angeordneten Austragseinrichtungen zusammenwirkt, wobei die Austragseinrichtungen mittels weiterer Führungselemente gegenüber dem Kratzfördergerät verlagert sind. Das Zugorgan soll hierbei außerhalb der als doppel-T-förmig ausgebildeten Führungselemente angeordnet sein. Bei Verwendung von mindestens zwei nebeneinander angeordneten Rundgliederketten als Zugorgane können diese wechselweise an aufeinanderfolgenden Austragseinrichtungen befestigt werden. Gegenüber Laschenketten können Rundgliederketten bei optimaler Auslegung etwa gleiche Standzeiten erreichen, wobei jedoch die Kettengeschwindigkeit wesentlich erhöht werden kann. Darüber hinaus ist eine verhältnismäßig geringe Polygonwirkung zu erwarten, wobei die Kette auch sphärische Bewegungen ohne Schäden ausführen kann. Längungen der Kette, die sich im Betriebszustand zwangsläufig einstellen, können durch Entfernen einzelner Kettenglieder ausgeglichen werden. Darüber hinaus können die Schleifgeräusche der Kette gegenüber der Laschenkette reduziert werden.

Auch wenn hier bereits gegenüber der Laschenkette erhebliche Vorteile herbeigeführt werden, so darf dennoch nicht verkannt werden, daß auch hier Stahlelemente vorliegen, die einerseits Geräusche verursachen und andererseits zu hohem Verschleiß neigen, wobei auch das Entfernen der Kettenglieder als arbeitsintensiv angesehen werden muß.

Durch die DE-A 21 61 092 ist ein Zahnriemen mit beiderseits einer Armierung angeordneten sich gegenüberstehenden Zahnblöcken unterschiedlicher Höhe bekannt. Die Zahnblöcke größerer Höhe sind in Längsrichtung des Zahnriemens breiter und bilden schmalere Lücken zwischen benachbarten Flanken als die an der gegenüberliegenden Seite der Armierung befindlichen niedrigeren Zahnblöcke, wobei die Höhe der größeren Blöcke so bemessen ist, daß der Einsatz von Stützrollen und Umlenkrädern mit erhöhten Seitenrädern unter Berücksichtigung von Aufhängungen möglich ist. Beim Eingreifen des Antriebsrades in die Gummikette entsteht eine Relativbewegung zwischen Ketten- und Antriebsverzahnung. Diese Bewegung wird von verschleißfesten Rollen im Eingriffskreis des Rades in eine Drehbewegung umgewandelt, so daß eine direkte Reibung zwischen Gummikette und Radverzahnung verhindert wird. Die Antriebsverzahnung greift formschlüssig in das rollenverzahnte Antriebsrad ein, wodurch ein schlupfloser Antrieb sichergestellt ist.

Die DE-C 12 83 612 betrifft ein Zahnriemenförderband für hohe Geschwindigkeiten und/oder hohe Lasten mit daran angehängten Förderelementen, das beiderseits einer Armierung sich gegenüberstehende Zahnblöcke aus elastischem Material aufweist und bei dem beiderseits der Armierung innerhalb der beiden übereinanderliegenden, aus elastischem Material bestehenden Zähnen je eine Querbohrung ausgenommen ist. In die Querbohrung ist je ein Stab eingeschoben, dessen aus der Bohrung hervorstehende Stabenden durch zueinander parallele Laschen verbunden sind, die über die eine Verzahnung des Zahnriemens herausragen und in diesem Bereich durch einen weiteren Stab miteinander verbunden sind, der die Förderelemente trägt.

Der DE-OS 34 47 218 ist ein als Steilförderer ausgebildeter Stetigentlader zu entnehmen. Die Austragseinrichtungen sind als Becher ausgebildet, die neben einem vorderen auch einen seitlichen Freischnittwinkel haben, wobei der Zugträger seitliche Kräfte aufnehmen und übertragen kann. Der Zugträger kann als ein- oder mehrsträngige Gummikette mit einvulkanisierten Befestigungselementen und Stahlseilen ausgeführt sein. Gegenüber einer Stahlkette ist der Geräuschpegel einer Gummikette erheblich niedriger und die Laufruhe wesentlich höher. Durch die Anpassung der Strangzahl an die Belastung des Steilförderers ist eine hohe Flexibilität gegeben. Darüber hinaus benötigen Gummiketten keine Schmierstoffe im Bereich des Zugträgers.

Gummigliederketten sind zwar geräusch- und wartungsarme sowie schmierungsfreie Zugorgane, wobei jedoch, insbesondere im Hinblick auf die Verlagerung der Transportelemente sowie deren Laufrollenführung, Probleme im Hinblick auf sich ändernde Längen der Gummigliederkette bei der Turasumlenkung gegeben sind, die Zwängungen zwischen den Laufrollen und den Führungen mit sich bringen und demzufolge einen hohen Verschleiß an den Bauteilen bewirken. Dem St.d.T. sind hierbei keine zufriedenstellenden Lösungen zu entnehmen.

Der Anmeldungsgegenstand verfolgt das Ziel, die im gattungsbildenden Teil des ersten Patentanspruches beschriebene Antriebs- und Führungseinrichtung für Stetigförderer konstruktiv so auszubilden, daß mit einfachen Mitteln einerseits die Verlagerung der Transportelemente gegenüber den Zugorganen und andererseits eine sichere zwängungsfreie Umlenkung der Transportelemente um die Antriebsräder bzw. -scheiben ermöglicht werden kann. Gleichzeitig soll die Anzahl der Lauf- und Führungsrollen verringert werden.

Dieses Ziel wird durch folgende Merkmale erreicht:
- in die Blöcke der Blockverzahnung sind mit vorgegebenem Teilungsabstand Bohrungen zur Aufnahme von Laufrollenachsen eingebracht, die im Bereich ihres einen freien Endes mit einer kombinierten Axial-Radial-Laufrollebestückt sind, die in entsprechenden neben der Gummigliederkette vorgesehenen Führungsprofilen abrollen,
- die Transportelemente sind mit der Gummigliederkette über Laschen verbunden, dergestalt, daß eine der Laschen mit dem anderen freien Ende der Laufrollenachse zusammenwirkt und eine weitere Lasche im Bereich der Axial-Radial-Laufrolle vorgesehen ist,
- zumindest eine der Laschen ist mit mindestens einer weiteren Ausnehmung zur Aufnahme einer nicht mit der Gummigliederkette verbundenen dem jeweiligen Transportelement nachlaufenden Kurvenrolle versehen.

Vorteilhafte Weiterbildungen des Erfindungsgegenstandes sind den Unteransprüchen zu entnehmen.

Antriebsart und Aufbau der Gummigliederkette ermöglichen das synchrone Führen mehrerer Ketten nebeneinander und die Einhaltung vorgegebener Geschwindigkeiten auch bei veränderlichen Belastungen. Das Endlosschließen der Gummigliederketten erfolgt in Anlehnung an die Technik der Endlosvulkanisation von Stahlseilfördergurten. Die Kettenbreite ergibt sich aus der zu übertragenden Kettenzugkraft unter Berücksichtigung einer erhöhten Sicherheit gegen Bruch der Kettenverbindung.

Die in Abhängigkeit vom jeweiligen Stetigförderer unterschiedlichen Transportelemente, wie z.B. Kratzerschaufeln, Bechergefäße, Platten, Stufen oder dgl., sind über angeschraubte Laschen und Laufrollenachsen mit der Gummigliederkette als Zugorgan verbunden. Die Laufrollenachse ist verdrehsicher z.B. mit Wellenabflachungen in den Laschen eingesetzt und gegen Querbewegung gesichert. Eine dünnwandige Gleitbuchse, einvulkanisiert in die Blockverzahnung der Gummigliederkette, ermöglicht Ausgleichsbewegungen der Laufrollenachse innerhalb der Aufnahmebohrung. Die zum Einsatz kommende Axial-Radial- Laufrolle nimmt sowohl axiale als auch radiale Belastungen in Wälzlagerungen auf und läuft hierbei ggf. in einem gezogenen Spezial-oder in einem DIN-Trägerprofil. Die Axial-Radial-Laufrolle ist gegen Schmutzeintritt abgedichtet und wartungsfrei. Sie kann jedoch auch über eine Schmierbohrung in der Laufrollenachse nachgeschmiert werden. Die Kombination von Axial- und Radial-Laufrolle in einem Bauteil erübrigt zusätzliche Führungsrollen und -bahnen, die üblicherweise mittig zwischen den Zugketten angeordnet werden, wie dies auch der DE-OS 35 33 774 zu entnehmen ist. Bei Verwendung von gezogenen Präzisionslaufprofilen können neben einer höheren Laufruhe der Gummigliederkette auch niedrigere Laufwiderstände für die Rollen herbeigeführt werden.

Die Laschen für die Transportelemente sind mit Bohrungen zur Aufnahme je einer Axial-Radial-Laufrolle mit zugehöriger Laufrollenachse versehen. Die dem Führungsprofil zugewandte Lasche weist darüber hinaus Ausnehmungen zur Verlagerung der nachlaufenden Kurvenrolle auf. Beide Rollen sind um ein vorgegebenes Maß gegenüber der Achse des zugehörigen Transportelementes versetzt angeordnet, um beispielsweise bei Kratzförderern das aus den Kratz- und Förderwiderständen resultierende Schaufelverdrehmoment im Laufprofil der Stütz- bzw. Führungsrollen aufzunehmen. Die Axial-Radial-Rolle trägt, stützt und führt die Transportelemente, wohingegen die nachlaufende, lediglich als Radial-Rolle ausgebildete Kurvenrolle in Zusammenwirken mit der Axial-Radial-Rolle nur das Verdrehmoment der Transportelemente aufnimmt. Dadurch, daß die Radial-Rolle nicht mit der Gummigliederkette über eine Trägerachse verbunden ist, können die Transportelemente über Antriebs-, Umlenk- und Ablenkscheiben geführt werden, ohne daß Zwängungen beim Umlauf auftreten.

Die Antriebsscheiben bzw. -räder können in Anlehnung an die Maßgaben der DE-OS 21 61 092 ausgebildet werden. Eine zum Teil offene Stegbauweise des Rades ermöglicht beim Schüttguttransport den Austritt eingedrückten Fördergutes zwischen Kettenverzahnung und Antriebsrad und verhindert damit ein Zusetzen der Radverzahnung. Da die Gummigliederkette samt Stahlseilzugträgern über wesentlich kleinere Antriebsräder angetrieben werden kann als es bei herkömmlichen Laschen- und Rundgliederketten der Fall ist, werden die auf die Transportelemente und das Fördergut wirkenden Zentrifugalkräfte reduziert und bei Einsatz von Bechern oder Schaufeln als Transportelemente auch bei Erhöhung der Fördergeschwindigkeit eine sichere Entleerung derselben gewährleistet.

Der größte Vorteil bei Einsatz des vorgeschlagenen konstruktiven Aufbaus liegt in der Möglichkeit, bei vorgegebener Förderleistung die Fördergeschwindigkeit gegenüber Laschen- (und zum Teil auch bei Rundgliederketten) systemen zu verdoppeln und dadurch, insbesondere beim Schüttguttransport, kleinere Transportelemente, wie Becher oder Schaufeln einzusetzen. Eine leichtere Kette, die sich zumal konventionell vorspannen läßt, leichtere Transportelemente und die Einsparung zusätzlicher Führungsrollen mit zugehörigen Führungsbahnen stellt eine nicht unwesentliche Gewichtseinsparung dar. Diese Gewichtseinsparung, einhergehend mit niedrigeren Bewegungswiderständen, hat Auswirkungen auf das Gesamtgewicht und die installierte Antriebsleistung des Stetigförderers.

Die Erfindung ist anhand mehrerer Ausführungsbeispiele in der Zeichnung dargestellt und wird im folgenden näher beschrieben. Es zeigen:
- Figur 1 -: Teildarstellung einer Antriebs- und Führungseinrichtung für die Transportelemente eines Brückenkratzers in der Seitenansicht
- Figur 2 -: Teildarstellung der Antriebs- und Führungseinrichtung gemäß Figur 1 in der Draufsicht
- Figur 3 -: Schnitt durch die Einrichtung nach Figur 1 gemäß der Linie A-A
- Figur 4 -: Schnitt durch die Einrichtung nach Figur 1 gemäß der Linie B-B
- Figur 5 -: Teildarstellung eines Umlenkbereiches der Einrichtung gemäß Figur 1
- Figur 6 -: Teildarstellung einer Rolltreppe mit Trittstufen sowie zugehöriger Antriebs- und Führungseinrichtung in der Draufsicht
- Figur 7 -: Teildarstellung eines Rollsteiges mit Transportplatten sowie zugehöriger Antriebs- und Führungseinrichtung in der Vorderansicht

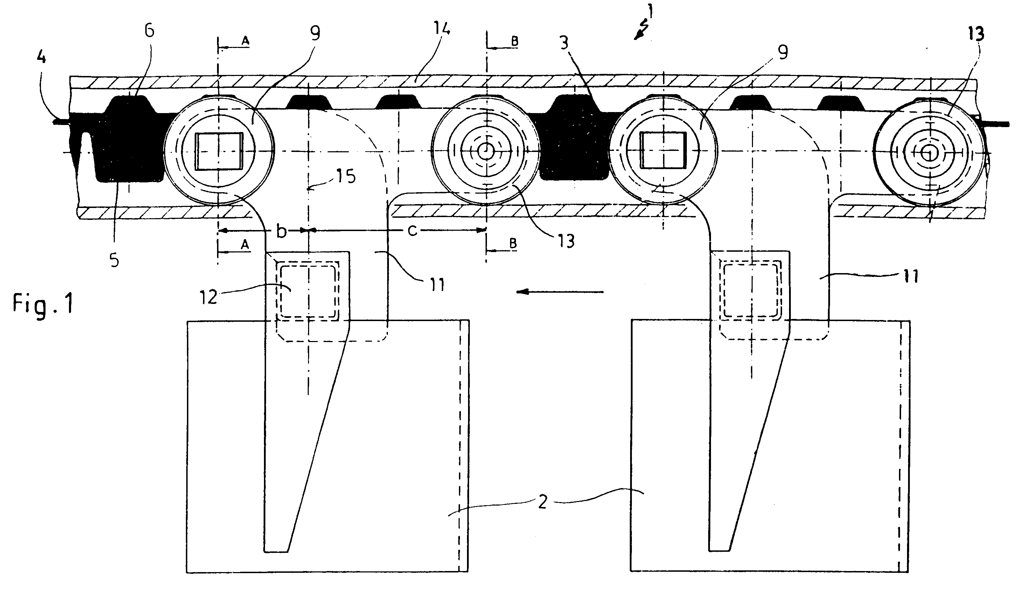

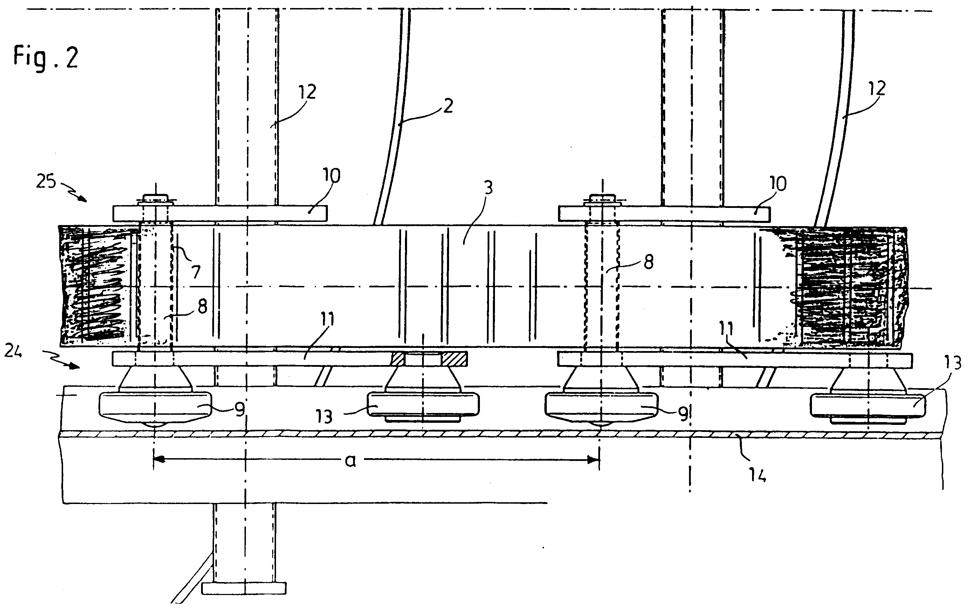

Die Figuren 1 und 2 zeigen die erfindungsgemäße Antriebs- und Führungseinrichtung 1 für die als Kratzerschaufeln ausgebildeten Transportelemente 2 eines nicht weiter dargestellten Brückenkratzers. Das Zugorgan 3 besteht aus einer profilierten Gummigliederkette mit Stahlseilzugträgern 4, wobei die Gummigliederkette 3 auf ihrer den Kratzerschaufeln 2 zugewandten Seite als Blockverzahnung 5 und auf der gegenüberliegenden Seite als Antriebsverzahnung 6 ausgebildet ist. In die Blöcke 5 sind mit vorgegebenem Teilungsabstand a Bohrungen 7 zur Aufnahme einer Laufrollenachse 8 eingebracht. Im Bereich ihres einen freien Endes (24) ist die Laufrollenachse 8 mit einer kombinierten Axial-Radial-Laufrolle 9 versehen, die, in Laufrichtung der Kratzerschaufeln 2 (Pfeilrichtung) gesehen, vorne angeordnet ist. An den Kratzerschaufeln 2 sind Laschen 10,11 angeordnet, die einerseits mit den die Kratzerschaufeln 2 haltenden Traversen 12 und andererseits mit der Laufrollenachse 8 verdrehsicher verbunden sind. Eine der Laschen 11 ist axial verlängert und trägt im Bereich ihres freien Endes eine weitere nicht mit der Gummigliederkette 3 verbundene Kurvenrollen in Form einer Radial-Rolle 13.

Die Laufrollen 9,13 rollen hierbei in einem im Querschnitt etwa U-förmigen gezogenen Führungsprofil 14 ab. Die Laufrolle 13 ist als Radial-Rolle ausgelegt, da die kombinierte Axial-Radial-Rolle 9 die Kratzerschaufeln 2 trägt, stützt und führt, wohingegen die Laufrolle 13 in Zusammenwirken mit der Axial-Radial-Laufrolle 9 lediglich das Verdrehmoment der Kratzerschaufeln 2 aufnimmt.

Der Abstand b der Radial-Axial-Rolle 9 zur Achse 15 der Kratzerschaufeln 2 ist in diesem Beispiel gegenüber dem Abstand c der Radial-Rolle 13 zur Achse 15 der Kratzerschaufeln 2 geringer ausgebildet, wobei diese Maßgabe nicht zwingend ist. Die Anordnung der Radial-Axial-Rolle 9 und der Radial-Rolle 13 mit Abstandsmaß b bzw. c zur Achse 15 der Kratzerschaufeln 2 dient dem Zweck, das aus den Kratz- und Förderwiderständen resultierende Verdrehmoment der Kratzerschaufeln 2 im Führungsprofil 14 der Stütz- bzw. Führungsrollen aufzunehmen.

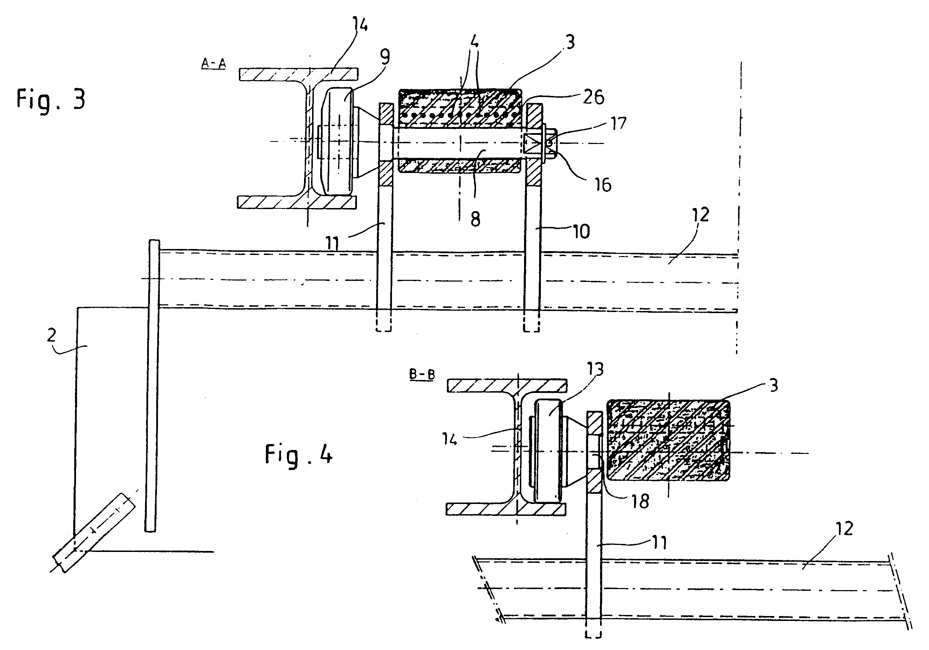

Die Figuren 3 und 4 zeigen Schnitte durch die Figur 1 gemäß den Linien A-A bzw. B-B.

In Figur 3 erkennbar ist die Gummigliederkette 3 samt Stahlseilzugträger 4, die Laufrollenachse 8, die Laschen 10,11, die Axial-Radial-Laufrolle 9 sowie das Führungsprofil 14. Die Laufrollenachse 8 ist im Bereich ihres anderen freien Endes 25 zum Zwecke der Verlagerung in der Lasche 10 mit einer Abflachung 16 versehen und gegen Herausrutschen mittels eines Bolzens 17 gesichert. Die Laschen 10,11 sind an der Traverse 12 der hier nur angedeuteten Kratzerschaufeln 2 verlagert. Um eine radiale Relativbewegung zwischen Bohrung 7 und Laufrollenachse 8 zu ermöglichen, ist in der Bohrung 7 eine dünnwandige Gleitbuchse 26 einvulkanisiert.

In Figur 4 sind folgende Bauteile zu erkennen:
die Gummigliederkette 3, die Lasche 11, die als Radial-Rolle ausgebildete Kurvenrolle 13 sowie das Führungsprofil 14. Die Radial-Rolle 13 ist über eine Achse 18 mit der Lasche 11 verbunden, die, wie bereits zu Figur 3 ausgeführt, an der Traverse 12 verlagert ist.

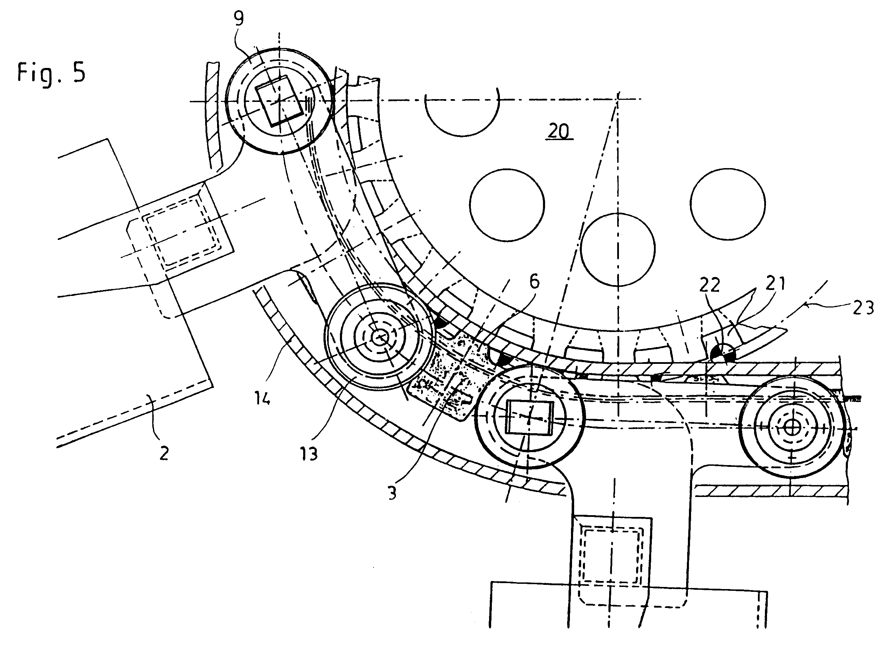

Figur 5 zeigt den Umlenkbereich 19 der Kratzerschaufeln 2 um ein nur angedeutetes Antriebsrad 20. Das Antriebsrad 20 ist an seinem äußeren Umfang mit Ausnehmungen 21 versehen, die dem Teilungsabstand der Antriebsverzahnung 6 der Gummigliederkette 3 entsprechen. Beim Eingreifen des Antriebsrades 20 in die Gummigliederkette 3 entsteht eine Relativbewegung zwischen der Verzahnung 6 der Gummigliederkette 3 und der Antriebsradverzahnung 21. Diese Bewegung wird von verschleißfesten Rollen 22 im Eingriffskreis 23 des Antriebsrades 20 in eine Drehbewegung umgewandelt, so daß eine direkte Reibung zwischen der Verzahnung 6 der Gummigliederkette 3 und der Radverzahnung 21 verhindert wird. Die Antriebsverzahnung 6 greift formschlüssig in das rollenverzahnte Antriebsrad 20 ein, wodurch ein schlupfloser Antrieb selbst bei hoher Zugbelastung gewährleistet ist. Dadurch, daß die Kurvenrolle 13 nicht mit der Gummigliederkette 3 verbunden ist, treten bei der Umlenkung der Kratzerschaufeln 2 keinerlei Zwängungen im Bereich der Führungsprofile 14 auf.

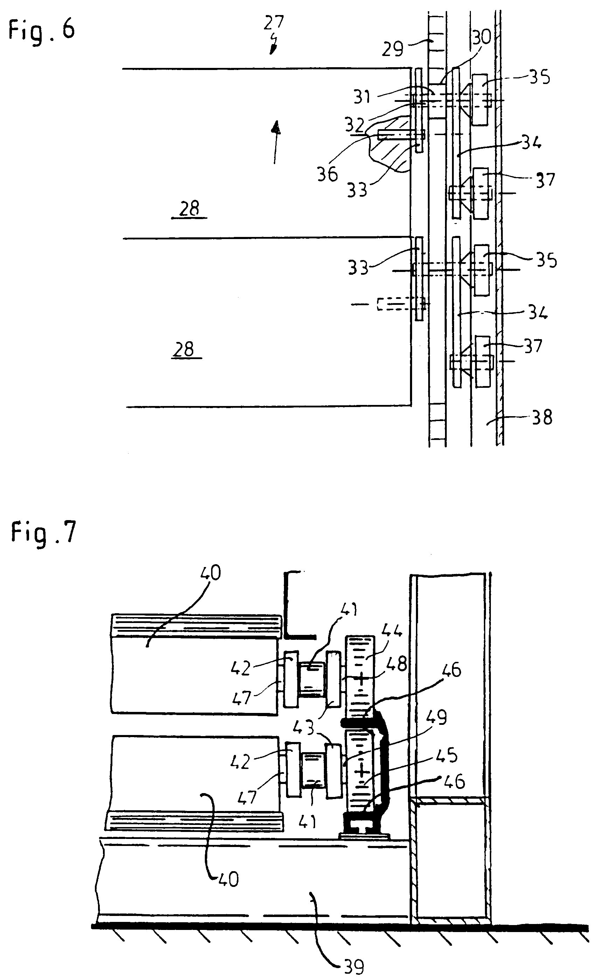

Figur 6 zeigt als Teildarstellung eine Rolltreppe 27 für den Personentransport mit als Trittstufen ausgebildeten Transportelementen 28. Als Zugorgan kommt analog zu den Figuren 1 bis 5 auch hier eine Gummigliederkette 29 zum Einsatz. In die Blöcke 30 sind mit vorgegebenen Teilungsabständen Bohrungen 31 zur Aufnahme einer Laufrollenachse 32 eingebracht. Neben der Gummigliederkette 29 sind Laschen 33,34 vorgesehen, von denen die Lasche 34 länger ausgebildet ist als die Lasche 33. Die Laufrollenachse 32 ist einerseits in der Lasche 33 verlagert und weist andererseits eine kombinierte Axial-Radial-Laufrolle 35 auf. Die Lasche 33 ist über einen Bolzen 36 mit der jeweiligen Trittstufe 28 verbunden. Im Bereich des freien Endes der Lasche 34 ist eine als Kurvenrolle ausgebildete Radialrolle 37 vorgesehen. Sowohl die Axial-Radial-Laufrolle 35 als auch die Radialrolle 37 sind in entsprechenden Führungsprofilen 38 im unteren Bereich der nicht weiter dargestellten Balustrade der Rolltreppe 27 vorgesehen.

Figur 7 zeigt als Teildarstellung einen Rollsteig 39 für den im wesentlichen horizontalen Personentransport mit als Platten ausgebildeten Transportelementen 40 in der Vorderansicht. Dargestellt sind die Gummigliederkette 41, die Laschen 42,43, eine kombinierte Axial-Radial-Laufrolle 44 im Transporttrum sowie eine Radial-Laufrolle 45 als Kurvenrolle im Rücklauftrum sowie das Führungsprofil 46 zur gleichzeitigen Führung der Laufrollen 44,45 sowohl im Transport- als auch im Rücklauftrum. Über Bolzen 47 ist die Lasche 42 mit den Platten 40 verbunden, während die Laschen 43 einerseits über Laufrollenachsen 48 mit der kombinierten Axial-Radial-Laufrolle 44 und andererseits über Bolzen 49 mit der Radial-Laufrolle 45 verbunden sind.

## Patentansprüche

1. Antriebs- und Führungseinrichtung für mit Transportelementen (2,28,40) versehene Stetigförderer (1,27,39), mit mindestens einem als profilierte Gummigliederkette (3,29,41) mit Stahlseilzugträgern (4) ausgebildetem Zugorgan, das in seinen jeweiligen Endbereichen um ebenfalls profilierte Antriebsscheiben oder -räder (20) umlenkbar ist, wobei die Gummigliederkette (3,29,41) auf ihrer den Transportelementen (2,28,40) zugewandten Seite als Blockverzahnung (5,30) und auf der gegenüberliegenden Seite als Antriebsverzahnung (6) ausgebildet ist und über Verbindungs- und Führungselemente, wie Rollen (9,13,35,37,44,45) oder dgl. mit den Transportelementen (2,28,40) zusammenwirkt, gekennzeichnet durch folgende Merkmale:
- in die Blöcke (5,30) der Blockverzahnung sind mit vorgegebenem Teilungsabstand (a) Bohrungen (7,31) zur Aufnahme von Laufrollenachsen (8,32,48) eingebracht, die im Bereich ihres einen freien Endes (24) mit einer kombinierten Axial-Radial-Laufrolle (9,35,44) bestückt sind, die in entsprechenden neben der Gummigliederkette (3,29,41) vorgesehenen Führungsprofilen (14,38,46) abrollen,
- die Transportelemente (2,28,40) sind mit der Gummigliederkette (3,29,41) über Laschen (10,11,33,34,42,43) verbunden, dergestalt, daß eine der Laschen (10,33,42) mit dem anderen freien Ende (25) der Laufrollenachse (8,32,48) zusammenwirkt und eine weitere Lasche (11,34,43) im Bereich der Axial-Radial-Laufrolle (9,35,44) vorgesehen ist,
- zumindest eine der Laschen (11,34,43) ist mit mindestens einer weiteren Ausnehmung zur Aufnahme einer nicht mit der Gummigliederkette (3,29,41) verbundenen dem jeweiligen Transportelement (2,28,40) nachlaufenden Kurvenrolle (13,37,45) versehen.

2. Antriebs- und Führungseinrichtung nach Anspruch 1, dadurch gekennzeichnet, daß die Achse (18) der als Radial-Rolle ausgebildeten Kurvenrolle (13,37,45) ausschließlich mit der dem Führungsprofil (14,38,46) zugewandten Lasche (11,34,43) verbunden ist.

3. Antriebs- und Führungseinrichtung nach den Ansprüchen 1 und 2, dadurch gekennzeichnet, daß die dem Führungsprofil (14,38,46) zugewandte Lasche (11,34,43) axial länger als die gegenüberliegende Lasche (10,33,42) ausgebildet ist, und daß die Kurvenrolle (13,37,45) im Bereich der axialen Verlängerung angeordnet ist.

4. Antriebs- und Führungseinrichtung nach den Ansprüchen 1 und 2, dadurch gekennzeichnet, daß die Laufrollenachse (8,32,48) verdrehsicher, insbesondere über Wellenabflachungen (16) in die Ausnehmungen der Laschen (10,11,33,34,42,43) eingesetzt und gegen Querbewegungen gesichert ist (17).

5. Antriebs- und Führungseinrichtung nach den Ansprüchen 1 bis 4, dadurch gekennzeichnet, daß in die Bohrungen (7,31) der Blöcke (5,30) eine dünnwandige Gleitbuchse (26) zur Aufnahme und Führung der jeweiligen Laufrollenachse (8,32,48) einvulkanisiert ist.

6. Antriebs- und Führungseinrichtung nach den Ansprüchen 1 bis 5, dadurch gekennzeichnet, daß das Führungsprofil (14,38,46) als Ziehteil oder Walzprofil mit U- oder doppel-T-förmigem Querschnitt ausgebildet ist.

7. Antriebs- und Führungseinrichtung nach den Ansprüchen 1 bis 6, dadurch gekennzeichnet, daß die Axial-Radial-Laufrolle (9,35,44) und die Kurvenrolle (13,37,45) um ein vorgegebenes Maß (b,c) gegenüber der Achse (15) des jeweiligen Transportelementes (2,28,40) versetzt angeordnet sind.

## Claims

1. Drive and guide device for continuous handling equipment (1, 27, 39) fitted with transport elements (2, 28, 40), with at least one traction member, which is constructed in the form of a profiled rubber link chain (3, 29, 41) with steel rope tackle supports (4) and which may be deflected in its respective end regions around likewise profiled driving pulleys or wheels (20), wherein said rubber link chain (3, 29, 41) is constructed on its side facing the transport elements (2, 28, 40) as block gearing (5, 30) and on the opposite side as drive gearing (6), and cooperates with the transport elements (2, 28, 40) via connecting and guide elements such as rollers (9, 13, 35, 37, 44, 45) or similar, characterised by the following features:
- holes (7, 31) spaced at predetermined distance (a) are made in the blocks (5, 30) of the block gearing to receive idler axes (8, 32, 48), said holes being fitted in the region of their one free end (24) with a combined axial-radial idler (9, 35, 44), which run in corresponding guide profiles (14, 38, 46) provided adjacent to the rubber link chain (3, 29, 41);
- the transport elements (2, 28, 40) are connected to the rubber link chain (3, 29, 41) via straps (10, 11, 33, 34, 42, 43) so that one of the straps (10, 33, 42) cooperates with the other free end (25) of the idler axis (8, 32, 48) and a further strap (11, 34, 43) is provided in the region of the axial-radial idler (9, 35, 44);
- at least one of the straps (11, 34, 43) is provided with at least one further recess to receive a cam roller (13, 37, 45) which is not connected to the rubber link chain (3, 29, 41) and follows the respective transport element (2, 28, 40).

2. Drive and guide device according to Claim 1, characterised in that the axis (18) of the cam roller (13, 37, 45) constructed as a radial roller is only connected to the strap (11, 34, 43) facing the guide profile (14, 38, 46).

3. Drive and guide device according to Claims 1 and 2, characterised in that the strap (11, 34, 43) facing the guide profile (14, 38, 46) is axially longer than the opposite strap (10, 33, 42), and that the cam roller (13, 37, 45) is arranged in the region of the axial extension.

4. Drive and guide device according to Claims 1 and 2, characterised in that the idler axis (8, 32, 48) is inserted against rotation into the recesses of the straps (10, 11, 33, 34, 42, 43), in particular via flattened shaft areas (16), and is secured against transverse movements (17).

5. Drive and guide device according to Claims 1 to 4, characterised in that a thin-walled slide bush (26) is vulcanised into the holes (7, 31) of the blocks (5, 30) to receive and guide the respective idler axis (8, 32, 48).

6. Drive and guide device according to Claims 1 to 5, characterised in that the guide profile (14, 38, 46) is constructed as a pulling part or rolling profile with a U- or double-T-shaped cross-section.

7. Drive and guide device according to Claims 1 to 6, characterised in that the axial-radial idler (9, 35, 44) and the cam roller (13, 37, 45) are arranged offset by a predetermined amount (b, c) relative to the axis (15) of the respective transport element (2, 28, 40).

## Revendications

1. Dispositif d'entraînement et de guidage pour des convoyeurs continus (1, 27, 89) équipés d'organes de transport (2, 28, 40), comportant au moins un organe de traction qui est réalisé sous la forme d'une chaîne profilée à maillons en caoutchouc (3, 29, 41), réalisée avec des tirants en câble d'acier, et qui peut tourner, à chacune de ses zones d'extrémité, autour de poulies ou de roues d'entraînement (20), étant entendu que la chaîne à maillons en caoutchouc (3, 29, 41) est réalisée, sur la face tournée vers les éléments de transport (2, 28, 40), sous la forme d'une denture (5, 30) constituée par des blocs, et, sur la face opposée, sous la forme d'une denture d'entraînement (6), et que cette chaîne agit en coordination avec les organes de transport (2, 28, 40), par l'intermédiaire d'organes de liaison et de guidage, comme des galets (9, 13, 35, 37, 44, 45) ou similaires, caractérisé par les caractéristiques suivantes:
- Dans les blocs (5, 30) constituant la denture, des alésages (7, 31) destinés à recevoir des axes (8, 32, 48) de galets de roulement sont réalisés, à un intervalle (a) déterminé à l'avance, ces axes étant, dans la zone de l'une (24) de leurs extrémités libres, équipés d'un galet de roulement (9, 35, 44) combiné axial-radial, roulant dans des profilés de guidage (14, 38, 46) prévus sur le côté de la chaîne à maillons en caoutchouc (3, 29, 41).
- Les organes de transport (2, 28, 40) sont reliés au moyen d'éclisses (10, 11, 33, 24, 42, 43) à la chaîne à maillons en caoutchouc (3, 29, 41), de telle façon que l'une des éclisses (10, 33, 42) agisse en coordination avec l'autre extrémité libre (25) de l'axe de galet de roulement (8, 32, 48), tandis qu'une autre éclisse (11, 34, 43) est prévue dans la zone du galet axial et radial (9, 35, 44).
- Au moins l'une des éclisses (11, 34, 43) est équipée d'au moins un autre évidement destiné à recevoir un galet de courbe non relié à la chaîne à maillons en caoutchouc (3, 29, 41) et circulant en suivant chaque organe de transport (2, 28, 40).

2. Dispositif d'entraînement et de guidage suivant la revendication 1, caractérisé en ce que l'axe (18) du galet de courbe (13, 37, 45), réalisé comme galet radial, est relié exclusivement à l'éclisse (11, 34, 43) tournée vers le profilé de guidage (14, 38, 46).

3. Dispositif d'entraînement et de guidage suivant la revendication 1 et la revendication 2, caractérisé en ce que l'éclisse (11, 34, 43) tournée vers le profilé de guidage (14, 38, 46) est réalisée plus longue axialement que l'éclisse (10, 33, 42) opposée, et en ce que le galet de courbe (13, 37, 45) est disposé dans la zone du prolongement axial.

4. Dispositif d'entraînement et de guidage suivant la revendication 1 et la revendication 2, caractérisé en ce que l'axe (8, 32, 48) du galet de roulement est monté dans les évidements des éclisses (10, 11, 33, 24, 42, 43) de façon à l'empêcher de tourner, en particulier au moyen de plats (16) de l'arbre, et est assuré (17) contre des déplacements transversaux.

5. Dispositif d'entraînement et de guidage suivant les revendications 1 à 4, caractérisé en ce que, dans les alésages (7, 31) des blocs (5, 30), est vulcanisée une douille de glissement à paroi mince (26), destinée à recevoir et à guider chaque axe (8, 32, 48) concerné de galet de roulement.

6. Dispositif d'entraînement et de guidage suivant les revendications 1 à 5, caractérisé en ce que le profilé de guidage (14, 38, 46) est réalisé sous la forme d'une pièce emboutie ou d'un profilé laminé comportant une forme en U ou en double T.

7. Dispositif d'entraînement et de guidage suivant les revendications 1 à 6, caractérisé en ce que le galet de roulement axial-radial (9, 35, 44) et le galet de courbe (13, 37, 45) sont disposés décalés d'une quantité (b, c) prédéfinie, par rapport à l'axe (15) de chaque organe de transport concerné (2, 28, 40).
